# EUROPEAN PATENT SPECIFICATION

(11) **EP 3 184 988 B1**
(45) Date of publication and mention of the grant of the patent: **17.04.2019**
(21) Application number: 15201848.7
(22) Date of filing: 22.12.2015
(51) Int. Cl.: G01N 3/08

(54) **ADHESION STRENGTH DETECTION SYSTEM AND METHOD**
SYSTEM UND VERFAHREN ZUR HAFTFESTIGKEITSERMITTLUNG
SYSTÈME ET MÉTHODE DE DÉTECTION D'ADHÉSION

(43) Date of publication of application: 28.06.2017
(73) Proprietor: Gambro Lundia AB, 220 10 Lund (SE)
(72) Inventor: Beck, Christof, 72475 Bitz (DE); Blickle, Rainer, 72475 Bitz (DE); Ermantraut, Stefan, 72336 Balingen (DE); Hertzler, Bernd, 72336 Balingen (DE); Wagner, Steffen, 72469 Meßstetten (DE)
(74) Representative: Perchenek, Nils

(56) References cited:
- WO-A1-97/37251
- US-A- 5 201 230
- US-B1- 6 339 958

## Description

### BACKGROUND

The present disclosure relates generally to adhesion strength testing for polymer materials. More specifically, the present disclosure relates to adhesion strength testing for medical uses such as the production of dialyzers for use in a renal failure treatment.

Adhesion testing may be performed for quality control purposes, and is routinely undertaken to conform to industry standards and customer specifications. In the automotive industry, for example, significant warranty claims and reputation loss may be avoided during the development phase by combining life cycle and environmental testing with adhesion testing.

Other industry examples include construction and maintenance work. Here, for example, epoxy coatings applied to protect steel from wear and corrosion require strong bonds. Failure of a coating applied during a large project, such as a 45,000 m² (500,000 ft²) bridge, may result in significant financial damage due to extensive rework and replacement costs.

In particular, the adhesion strength of a polymer material is a critical property for numerous technologies. For example, in electronic packaging, polymeric materials are used as thermal insulating layers, electrical insulating layers, or as binders between two non-adhesive material layers. In each case, the mechanical integrity of the resulting electronic package is directly dependent upon the integrity of the polymer interfacial areas. The surface properties and the bulk properties of the polymer layers have to be properly engineered to maximize or achieve a desired or required degree of adhesion strength for a given operating environment.

Given the wide range of physical requirements and end-use environmental conditions, finding a polymer that may be engineered to have desired or required adhesive properties can be a difficult, time consuming task. The efficiency of finding the best polymer material(s) is limited by the ineffectiveness of existing adhesion tests. Known adhesion tests can be inefficient and unreliable.

In addition to efficiency and reliability, it is also desirable to provide an adhesion strength testing system and method that is flexible in terms of the variables it can test. For instance, a dialyzer and hemofilter are used respectively in hemodialysis ("HD") and hemofiltration ("HF"), which are both methods of treating patients with kidney disease. The dialyzer and hemofilter each include a rigid polymer housing that seals at each end to a disk of potting material. The potting material disks each seal around the ends of a bundle of the semi-permeable membranes, which may be formed as long, thin, tubular strands. Blood flows within the semi-permeable membrane tubular strands, while dialysis fluid or substitution fluid flows outside the tubular strands. The potting material disks must therefore be made of a material that can be flowed around the ends of the semi-permeable membrane strands before being cured into hardened disks. There are accordingly material and other research and design factors involved with the design of a dialyzer or hemofilter.

Once formed, the dialyzers and hemofilters are sterilized in their packages to be safe for contacting a patient's blood. The dialyzers and hemofilters are then stored until use. It is accordingly desirable to have an adhesion strength testing system and method that can be used flexibly for each of dialyzer/hemofilter material selection, R&D, manufacturing, sterilization methodology testing, and environmental shelf-life testing, etc. The desirability of such a flexible adhesion strength testing system and method extends likewise to other industries and applications.

### SUMMARY

The present invention provides an adhesion strength detection system according to claim 1 and an adhesion strength detection method according to claim 12 for testing the adhesion strength between two polymers or between a polymer and a metal. The system and method employ a force or tensile testing machine, which may have an integrated heating chamber. Alternatively, the heating chamber may be a separate component. A thickness measuring gauge is also provided to measure a thickness of a cured polymer as discussed below. A timer is provided to time various procedures as discussed below.

The system and method also employ a die assembly. The die assembly includes a lower die. The lower die receives an upper fixture. The die and fixture are both cylindrical in one embodiment and may have matching or virtually matching inner diameters. The bore of the upper fixture receives a piston. During operation, the piston is pushed downwardly by the tensile testing machine through the bore of the fixture and into the bore of the lower die. Any of the upper fixture, lower die or piston of the die assembly may be made of metal or plastic as desired. Suitable metals include, but are not limited to, stainless steel, steel, aluminum, titanium, copper, brass, bronze (and other metals used for bearings) and combinations thereof. Suitable polymers include, but are not limited to, polyoxymethylene ("POM"), or polytetrafluoroethylene ("PTFE"). The materials of the upper fixture, lower die and piston of the die assembly are selected in an embodiment to produce low friction between the piston and the walls of the bores of the upper fixture and the lower die. One example of a suitable material combination would be aluminum for the piston and POM for the fixture.

The lower die of the die assembly receives the test sample. The test sample in one embodiment includes a test ring filled with a cured polymer disk. The test ring may be plastic, for example, PP or PC, or metal, such as any of the metals listed above. The cured polymer disk may, for example, be polyurethane ("PU"), epoxy resin, acrylate resin, or a thermoplastic polymer solidified from a melt. The adhesion test evaluates the adhesion strength between the cured polymer disk and the test ring. The thickness measuring gauge is used to determine the thickness of the cured polymer disk, which along with the diameter of the disk (which is the same as the inner diameter of the test ring) is used to calculate a contact surface area between the cured polymer disk and the test ring. The contact surface area is used in the evaluation of the adhesion strength between the cured polymer disk and the test ring.

The system and method of the present disclosure further include devices and structures that may provide necessary surface treatments, simulate manufacturing processes and/or simulate aging or shelf life. For example, an atmospheric plasma treatment device and/or an ultraviolet ("UV") lamp may be provided to surface treat the test ring prior to being contacted with the polymer in liquid form, before the polymer is cured and adhered to the ring. The surface treatment in one embodiment enhances the adhesion strength between the ring and the disk. The UV lamp, a gamma radiation source, a beta radiation source, an electron beam, a steam source, an ethylene oxide source or other sterilization source, may be used to simulate the effects of sterilization, which is needed for medical products, such as a dialyzer or hemofilter. Environmental devices such as heaters and humidity control devices may also be provided to speed aging and test shelf life.

In one implementation, the adhesion strength test includes placing the test ring (or multiple such rings) onto a strip of colored adhesive tape, which seals to the bottom of the plastic ring. The adhesive tape does not have to be colored but colored tape does provide certain advantages detailed below. Depending on the material of the plastic ring, it may or may not be surface treated prior to placement onto the colored adhesive tape.

An uncured (e.g., molten) polymer is then poured into a cup formed by the ring and the colored adhesive tape. In an embodiment, the uncured polymer is provided in a known mass, such as 5.0 grams. The polymer is left to cure (e.g., solidify) to form the polymer disk, e.g., for a period of forty-eight hours.

After curing, the disk is adhered to the inside of the test ring, so that the tape is no longer needed. The tape is removed. If colored tape is used, it will leave some of its color on the surface of the polymer disk, which is helpful when viewing the ring to know (i) that a disk is present inside the ring, (ii) the disk is fully cured, and (iii) which side of the disk to place down in the die assembly for testing.

In one embodiment, the ring is not perfectly cylindrical and is instead slightly conical, having a smaller diameter end and a larger diameter end. The tape is applied in one embodiment to the smaller diameter end, so that the polymer cures to the smaller diameter side, or on the smaller diameter half, of the ring.

Depending upon the use environment for the adhered polymers being tested, an environmental change may need to be applied to the adhered polymers. For example, many times in medical applications the resulting product will be operated at body temperature, about 37 °C, which is generally above ambient temperature. Here, it may be a good idea to heat the adhered polymer sample to body temperature prior to the force application. Other environmental changes include, for example, dipping the sample into water (for underwater environments) or lubricating the sample (for mechanical or motion-producing environments).

In one embodiment, the heated sample is loaded into the lower die of the die assembly, such that the open, larger diameter end of the ring faces down, and the disk containing, smaller diameter end faces up. The fixture of the die assembly is then placed onto the ring and the lower die to lock the ring in place when the die assembly is inserted into the tensile testing machine. The piston is inserted into the fixture, so that the piston comes to rest on the colored side of the cured polymer disk. The die assembly having the heated sample is then placed into the tensile testing machine, which may have its own heater to perform the prior heating step.

The tensile testing machine may store thereon multiple force application computer programs that control operation of the of the force applicator of the machine. The operator chooses one of the programs appropriate for the particular sample. The running program causes a force to be applied to the piston, which in turn applies a force to the cured polymer disk. In one embodiment, the diameter of the piston is the same or virtually the same as the diameter of the cured polymer disk, so that the force is distributed evenly across the colored surface of the disk. In one embodiment, the diameter of the piston is smaller than the diameter of the cured polymer disk by 0.05 to 0.2 mm. The force application computer program in one embodiment specifies as an input the speed at which the force applicator will move the piston of the die assembly. Here, the force applicator will apply whatever force is needed to achieve the set speed. Thus, force is a variable. A force measuring device measures the force output variable, which may be plotted as a function of time and/or as a function of distance moved.

The cured polymer disk resists more and more as it is increasingly flexed by the piston and the force applicator of the tensile testing machine. The force measured accordingly rises quickly until it reaches a peak force at the moment the disk delaminates from the test ring. The force measured then quickly falls.

In an embodiment, multiple ones of the same samples are tested to provide and average and to eliminate anomalous results. The repeated tests allow, for each sample set, an average value, a maximum value, a minimum value, and a standard deviation to be recorded or calculated and stored for both (i) force recorded at delamination and (ii) distance moved at delamination.

The present system and method may be used to evaluate the effects of many variables on adhesion strength. Regarding just the dialyzer application, the above recorded values may be compared to assess (i) the effects caused by different types of sterilization, (ii) the effects caused by different types of surface coatings, (iii) the effects caused by different types of hardened plastics or metals used for the ring, (iv) the effects of different types of cured polymers used for the disk, and (v) the effects of age and combinations thereof.

It is also contemplated to use the present system and method in many different industries, such as the electronics, automotive, or construction industries, to test the adhesion strength of polymer materials to other polymers or to metals, e.g., to composite metal parts.

In light of the above aspects and the present disclosure, it is therefore an advantage of the present disclosure to provide an adhesion strength test system and method that is repeatable.

It is another advantage of the present disclosure to provide an adhesion strength test system and method that provides meaningful results.

It is a further advantage of the present disclosure to provide an adhesion strength test system and method that is relatively easy to implement.

It is yet another advantage of the present disclosure to provide an adhesion strength test system and method that is relatively inexpensive to implement.

It is yet a further advantage of the present disclosure to provide an adhesion strength test system and method that may be used to test many different industrial applications.

It is still another advantage of the present disclosure to provide an adhesion strength test system and method that may be used to test the effects of many different variables for a given industrial application.

The advantages discussed herein may be found in one, or some, and perhaps not all of the embodiments disclosed herein. Additional features and advantages of the present invention are described in, and will be apparent from, the following Detailed Description of the Invention and the figures.

### BRIEF DESCRIPTION OF THE FIGURES

Fig. 1 is a schematic representation of one embodiment of the adhesion strength detection system of the present disclosure.
Figs. 2A and 2B are top and a cross-sectional elevation views, respectively, of one embodiment of a die assembly holding a sample of the present disclosure.
Figs. 3A and 3B are top and a cross-sectional elevation views, respectively, of one embodiment of a sample of the present disclosure.
Fig. 4 is a sectioned elevation view illustrating an interface between the cured polymer disk and the test ring of one embodiment of the sample of the present disclosure.
Fig. 5 is a perspective view illustrating one embodiment for creating the samples of the present disclosure.
Fig. 6 is a perspective view illustrating one embodiment for measuring a thickness of the cured polymer disk.
Fig. 7 is a perspective view illustrating one embodiment of a die assembly of the present disclosure disassembled and partially assembled.
Fig. 8 is a perspective view illustrating one embodiment for placing the test sample into the die assembly.
Fig. 9 is a schematic operational flow diagram summarizing one embodiment for the adhesion test method of the present disclosure.
Figs. 10A and 10B are a graph and corresponding chart illustrating adhesion strength results for five different measurements taken for like samples subjected to a certain type of sterilization.
Figs. 11A and 11B are a graph and corresponding chart illustrating adhesion strength results for five different measurements taken for like samples subjected to another type of sterilization.

### DETAILED DESCRIPTION

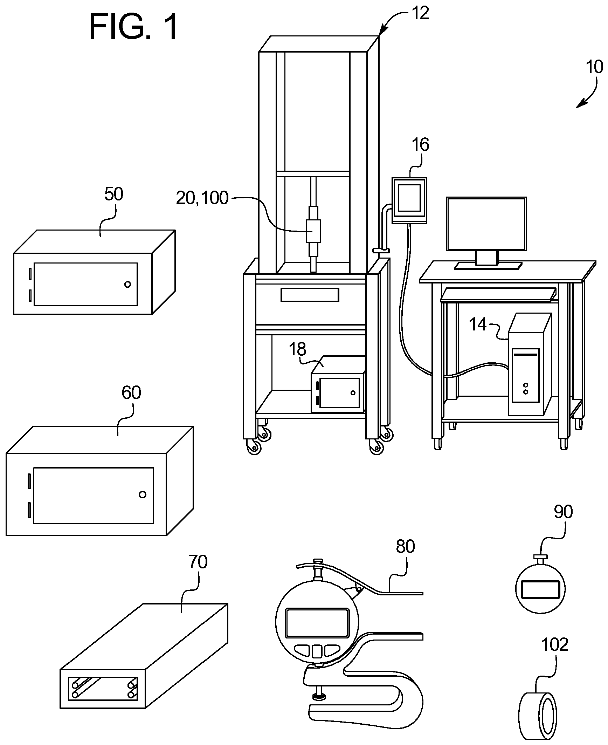

Referring now to the drawings and in particular to Fig. 1, an adhesion strength detection system 10 is illustrated. System 10 includes a tensile testing machine 12, a computer 14, a die assembly 20, a sample 100, colored adhesive tape 102, a plasma treatment device 50, a UV-irradiation lamp 60, an irradiation chamber 70, a thickness measuring gauge 80, and a timer 90.

Tensile testing machine 12 may, for example, be a 311 Family Electromechanical Universal Test Machine, 10 kN, (2,250 lb) provided by TestResources, Inc., Shakopee, MN 55379, USA. Tensile testing machine 12 may have an onboard computer 14 and/or be connectable to a separate personal computer 14 for sending results of the tensile tests performed. Tensile testing machine 12 includes a user interface 16, which stores one or more force application program that a testing person may program and later recall to perform a test. User interface 16 and onboard computer 14 may be or share the same computer in one embodiment.

Tensile testing machine 12 in an embodiment includes an onboard or integrated environmental chamber 18, such as a heating chamber. Environmental chamber 18 in another embodiment is provided separately from tensile testing machine 12. In the test sequences discussed below, heating chamber 18 heats the sample to a temperature at which the resulting product would be used. For example, a product being used to treat a patient's blood may be heated to human body temperature or 37°C.

Tensile testing machine 12 accepts a die assembly 20 holding a sample 100. Die assembly 20 and sample 100 are discussed in detail below. The testing person actuates a force application program via user interface 16, which causes a predefined motion to be applied to die assembly 20 and sample 100. In an embodiment, the predefined motion is a set rate or speed at which sample 100 is to be deformed. For example, the force application program may be set to cause a certain mm/minute of deflection (e.g., 9 to 10 mm/min) to be applied to sample 100. Tensile testing machine 12 measures the force resistance supplied by sample 100 against the mm/minute of deflection. In particular, tensile testing machine 12 records a resistive force supplied by sample 100 when two portions of the sample become unadhered or delaminated from each other. In this manner, adhesion strength between the two portions of sample 100 may be evaluated. The higher the resistive force at delamination, the better the adhesion.

The adhesion testing of the present disclosure may be used to evaluate many variables related to adhesion strength. The variables may for example be variables involved with making the sample, for example, making one portion of sample 100 adhere to another portion. For example, polypropylene ("PP") needs to be surface treated before it may be adhered to another polymer, such as polyurethane ("PU"). One suitable surface treatment is a plasma treatment. System 10 therefore includes a plasma treatment device 50. One suitable plasma treatment device is a VG3001, Serial No. 699 plasma treatment device. The adhesion testing of the present disclosure may therefore be used to evaluate the effects of different plasma treatments provided to sample 100 by device 50, e.g., evaluate the effects of plasma treatment time and/or plasma treatment dose. System 10 may likewise include and evaluate the effects of other pre- or during- production equipment, such as cleaners, sanders, laminators, sprayers and other surface treatment devices.

The variables tested may alternatively be associated with factors involved with the resulting product after it is made, e.g., variables due to the particular use of the resulting product. In one implementation, the product is a dialyzer or hemofilter used to clean a patient's blood. Because the dialyzer or hemofilter contact's the patient's blood, it needs to be sterilized prior to use.

There are different methods for sterilization, including subjecting the sample to gamma radiation, beta radiation or an electron beam, ultraviolet radiation, steam or ethylene oxide gas. In the illustrated embodiment, system 10 accordingly includes a gamma irradiation chamber 60 and an ultraviolet ("UV") radiation lamp 70. System 10 may also include other post-production equipment, such as aging equipment, life cycle equipment, etc. System 10 may be used to evaluate the effects of each of the above-listed post-production pieces of equipment on adhesive strength.

As discussed in more detail below, sample 100 is prepared in one embodiment by pouring a liquid polymer such as PU into a test ring and allowing the PU to cure and harden into a disk, adhering itself to the inside of the test ring. The surface area of adhesive contact is computed and recorded along with the force resistance provided by the sample. The surface area is calculated knowing the inner diameter of the test ring and the thickness of the cured PU disk. System 10 accordingly includes a thickness measuring gauge or calipers 80 to accurately measure the thickness of the cured polymer disk.

System 10 may further include a timer 90 for timing various events, such as time for heating the sample, time for application of any of plasma treatment device 50, gamma irradiation chamber 60 and UV radiation lamp 70 discussed above, and/or time until delamination when sample 100 is subjected to force application program applied by tensile testing machine 12. Timer 90 may be a separate timer or be supplied by tensile testing machine 12.

System 10 also includes materials used to make the samples, such as adhesive tape 102, e.g., colored or green adhesive tape. The adhesive tape 102 is applied to the bottom of the test ring before the liquefied polymer is poured into the test ring. After the polymer has cured into a disk and adhered itself to the test ring, adhesive tape 102 is removed from sample 100 (usually multiple samples 100 applied to same strip of tape 102). If colored adhesive tape is used (does not have to be colored), the color from tape 102 remains on the previously contacting surface of the cured polymer disk, making identification and orientation of a properly prepared sample 100 easier.

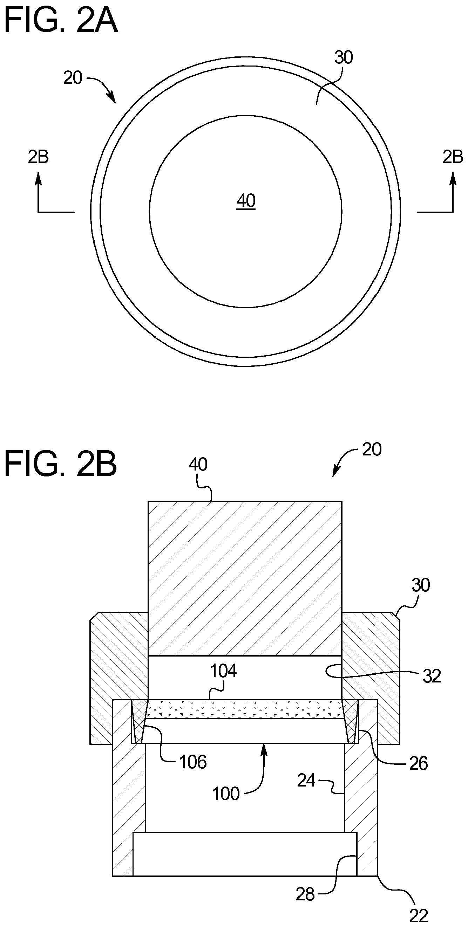

Referring now to Figs. 2A and 2B, one embodiment for die assembly 20 for use with tensile testing machine 12 is illustrated. Die assembly 20 includes a lower die 22, a fixture 30 fitted to lower die 22, and a piston 40 insertable into fixture 30. Lower die 22, fixture 30 and piston 40 may be made of metal or plastic or combinations thereof. Suitable metals include, but are not limited to, stainless steel, steel, aluminum, titanium, copper, brass, bronze (and other metals used for bearings) and combinations thereof. Suitable polymers include, but are not limited to, polyoxymethylene ("POM") or polytetrafluoroethylene ("PTFE"). In one implementation, lower die 22 and piston 40 are metal, while fixture 30 is plastic. Lower die 22 and piston 40 are load bearing when inserted into tensile testing machine, while fixture 30 is not.

Fig. 2B illustrates that lower die 22 is generally cylindrical in one embodiment, having a middle inner diameter section 24 that is slightly larger (e.g., 1 to 2 mm larger) than a diameter of piston 40 and a diameter of cured polymer disk 104 of sample 100. The diameter of piston 40 and the diameter of cured polymer disk 104 of sample 100 are the same in one embodiment. Alternatively, the diameter of piston 40 may be slightly smaller than the diameter of cured polymer disk 104 of sample 100, so that it is ensured that piston 40 can fit into test ring 106 of sample 100. It is preferred in one embodiment that piston 40 contact as much of cured polymer disk 104 as possible, so that cured polymer disk 104 deforms uniformly when tensile testing machine presses piston 40 onto sample 100.

Lower die 22 has two larger inner diameter end sections 26 and 28. End sections 26 and 28 in an embodiment are the same size so that it does not matter which end section 26 or 28 receives sample 100 fixture 30. In an embodiment, the inner diameters of end sections 26 or 28 are just slightly larger than an outer diameter of the test ring 106 of sample 100. The depth of larger inner diameter end sections 26 or 28 is the same or slightly larger than a height of test ring 106 of sample 100, so that fixture 30 may rest flush on lower die 22.

In another embodiment, end sections 26 and 28 are sized differently to accommodate test rings 106 having different outer diameters. For instance, if the same production mold (not illustrated) is used to prepare test rings 106 from different polymers, e.g., PP and PC, the resulting test rings 106 will not have the same outer diameter due to different shrinkage properties of the polymers after removal from the production mold. End sections 26 and 28 may therefore be sized differently to accept test rings 106 made using two different desirable materials, e.g., PP and PC, and produced from the same production mold.

Fixture 30 sits atop lower die 22 and test ring 106 of sample 100. Fixture 30 defines an opening 32, which is the same size or slightly larger than the diameter of piston 40, centering piston 40 above test ring 106. In an embodiment, lower die 22 and fixture 30 are clamped into tensile testing machine 12, securing test ring 106 in place. Piston 40 is rested on cured polymer disk 104. A member (not illustrated) of tensile testing machine 12 is moved at a preselected rate according to a force application program run on machine 12 against piston 40, which in turn deforms cured polymer disk 104, while test ring 106 is held in place within tensile testing machine 12. At a certain point, cured polymer disk 104 becomes delaminated from test ring 106. A maximum resistive force applied by cured polymer disk 104 is recorded and then analyzed.

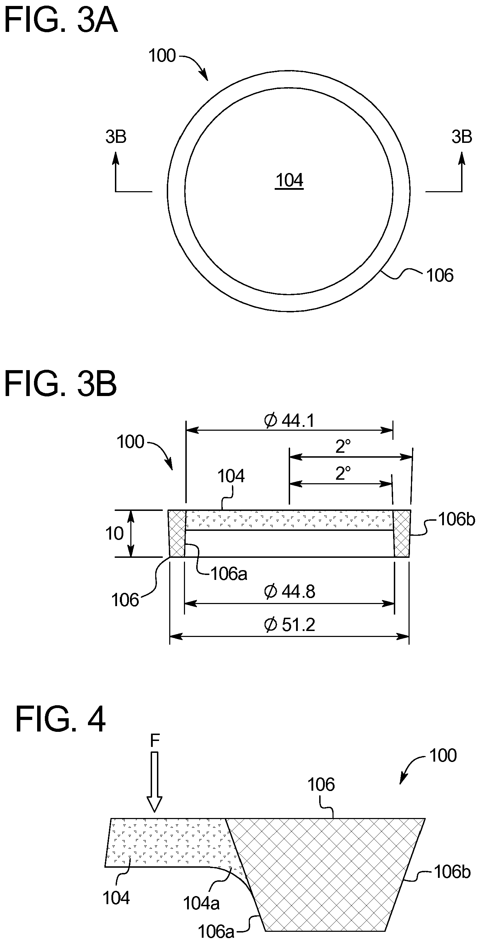

Figs. 3A and 3B illustrate one preferred embodiment for sample 100. As discussed, sample 100 includes a cured polymer disk 104 adhered to test ring 106. Test ring 106 may be plastic, e.g., PP or PC. Test ring 106 may alternatively be metal, e.g., stainless steel, steel, aluminum, titanium, copper, brass, bronze, and combinations thereof. Cured polymer disk 104 may, for example, be polyurethane ("PU"), epoxy resin, or acrylate resin. In another embodiment, polymer disk 104 is a thermoplastic polymer solidified from a melt. Sample 100 is shown in Fig. 3B in the orientation that it is placed in die assembly 20, with cured polymer disk 104 residing at the top end of test ring 106 and extending only partially into the inner diameter of test ring 106 in one embodiment.

In the illustrated embodiment, at least one of the inner and outer walls 106a and 106b of test ring 106 is not perfectly vertical and is instead formed at a slight angle, e.g., 2 degrees. The angles may be larger, e.g., up to fifteen degrees as needed. The slight angle of the inner diameter wall 106a causes the opening at the bottom of test ring 106 to be slightly larger than the opening at the top of test ring 106 to prevent friction between polymer disc 104 and test ring 106 after delamination, which could falsely impact the force measurement. The slight angle on the outer diameter wall 106b causes the outer diameter at the bottom of test ring 106 to be slightly smaller than the outer diameter at the top of test ring 106, so that test ring 106 can more easily come free from its production mold (not illustrated).

Example dimensions (mm) are provided in Fig. 3B for sample 100. The example dimensions are for illustrative purposes only and may be modified as needed. They do provide scale for one implementation of sample 100 and die assembly 20 however. It should be noted that the dimensions are dimensions for the mold for test ring 106, which may allow for shrinkage of the finished ring.

Referring now to Fig. 4, an exploded section of cured polymer disk 104 and test ring 106 is illustrated. Fig. 4 illustrates that when polymer disk 104 cures, it may form an upper and/or lower meniscus 104a at the interface with test ring 106. The meniscus and the angled walls 106a, 106b of test ring 106, and the corresponding angled wall of cured polymer disk 104, are ignored in the calculation of surface area contact between cured polymer disk 104 and test ring 106 in one embodiment. Alternatively, one or both of the meniscus and the angled walls may be taken into consideration for the surface area calculation.

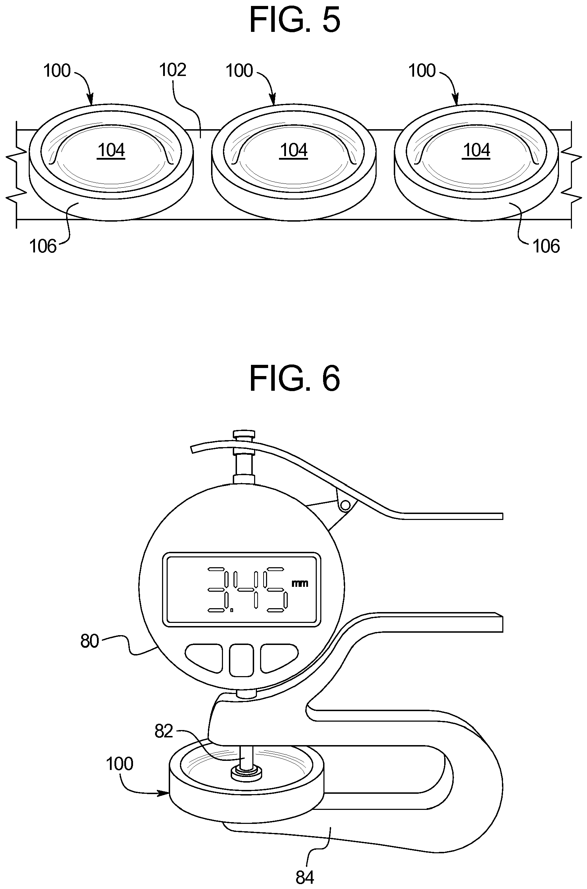

Referring now to Fig. 5, one embodiment for creating the samples 100 of the present disclosure is illustrated. Multiple test rings 106 are placed on the adhesive side of colored (e.g., green) adhesive tape 102. A liquefied polymer, e.g., a polyurethane reactive mixture ("PU") or a molten thermoplastic polymer, is then poured into each ring 106 on top of colored adhesive tape 102. A desired weight (e.g., 5.0 grams) of the liquefied polymer is poured in one embodiment. The liquefied polymer is allowed to cure for a preset time and temperature, e.g., 48 hours at room temperature, to form polymer disk 104 and to adhere to test ring 106. In an embodiment, samples 100 are cured in a clean room. After polymer disk 104 is fully cured, colored adhesive tape 102 is removed from samples 100, leaving behind color on the piston 40 contacting side of polymer disk 104.

Fig. 6 illustrates an embodiment for measuring the thickness of polymer disk 104. Thickness measuring gauge 80 is placed about sample 100 and tightened until its resting arms 82 and 84 come into contact with both sides of cured polymer disk 104, e.g., in the center of disk 104. In an embodiment, multiple thickness measurements are taken at different places along cured polymer disk 104 and averaged. The thickness measurement is used with the force recorded at time of delamination to evaluate adhesion strength, e.g., in force/area or N/mm².

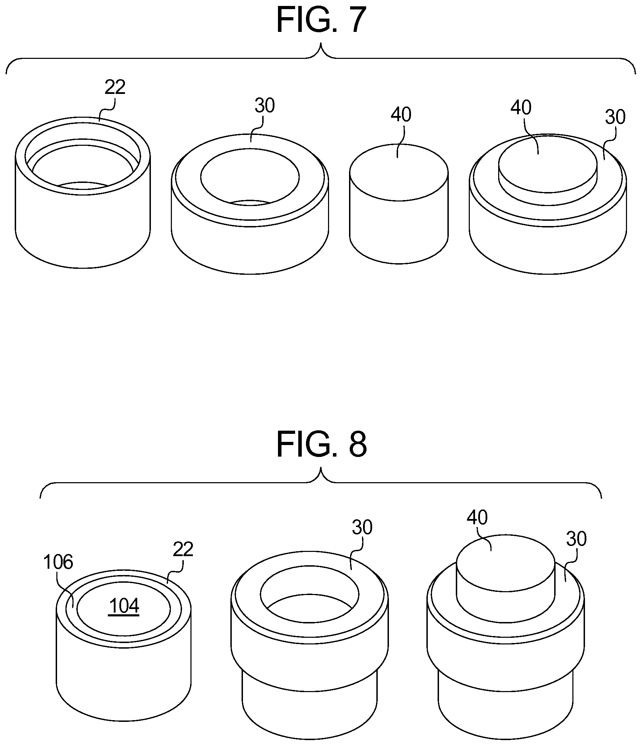

Fig. 7 illustrates die 22, fixture 30 and piston 40 disassembled, and piston 40 placed snugly into fixture 30. Fig. 8 illustrates one embodiment for placing test sample 100 into die assembly 20. First, sample 100 is placed into lower die 22 with the colored side of sample facing upwardly. Next, fixture 30 is placed onto lower die 22 and test ring 106 of sample 100. Finally, piston 40 is inserted into fixture 30, coming to rest on cured polymer disk 104 of sample 100.

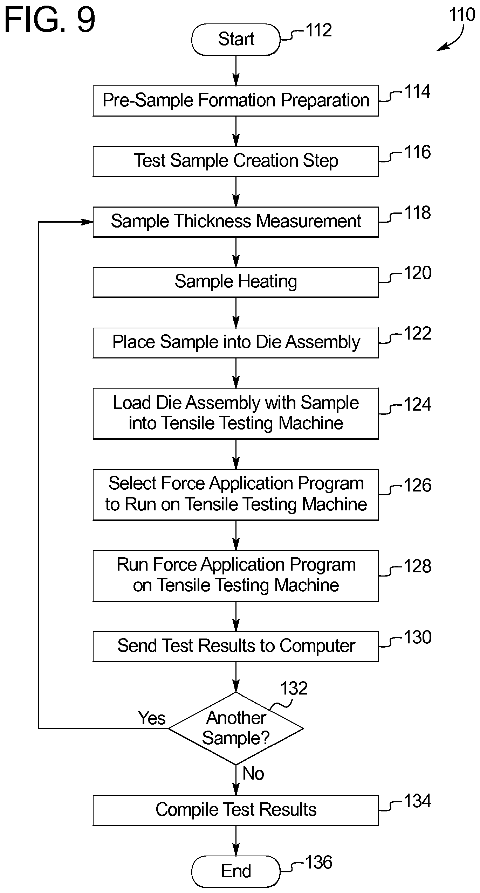

Fig. 9 summarizes one embodiment for an adhesion strength testing method 110 of the present disclosure. At oval 112, method 110 begins. At block 114, any pre-sample formation preparation work is performed. For example, test ring 106 may be made of a material, such as PP, which needs to be surface treated before being applied to tape 102 and receiving the liquefied PU. In one implementation, test ring 106 may be placed near plasma treatment device 50, e.g., 12 mm from a plasma head of device 50. Plasma device 50 then applies plasma to at least the inner diameter wall 106a of test ring 106 for a predetermined amount of time, e.g., three seconds. In another preparation example, UV-radiation lamp 70 is inserted into test ring 106 and is caused to apply UV radiation to at least the inner diameter wall 106a of test ring 106 for a predetermined amount of time, e.g., thirty-six seconds. UV radiation may also be used for surface treatment, for example. Pre-sample formation preparation step 114 may include any other desired treatment, process, or application.

At block 116, test samples 100 are created according to the steps described previously. In addition, method 100 at block 116 also includes determining pot life or working life of the liquefied polymer (how long until chemicals forming the polymer fully react) and Shore D hardness of the curing polymer disk 104 after set time periods, e.g., one hour, 3 hours, and 24 hours. Again, full curing time for polymer disk 104 may be 48 hours. It is also contemplated to keep colored adhesive tape 102 and test samples 100 in a horizontal position, so that the thickness of the curing polymer is even and consistent.

At blocks 118 and 120 (and perhaps additional blocks), any preparation work between the formation of sample 100 and the testing via tensile testing machine 12 is performed. In the illustrated example, the thickness of polymer disk 104 is measured as described above at block 118. At block 120, sample 100 is heated to body temperature or 37°C. Heating may last from 15 minutes to 240 minutes, for example, to reach body temperature or 37°C at a desired temperature gradient.

At block 122, sample 100 is placed into die assembly 20 as described above. At block 124, die assembly 20 with sample 100 is loaded into tensile testing machine 12. At block 126, the testing person selects a force application program via user interface 16 of tensile testing machine 12. At block 128, the selected force application program is applied (e.g., 9 to 10 mm/min) to sample 100 and the results, e.g., resistive force, are recorded until delamination occurs. At block 130, the results from the applied force application program are sent to computer 14, which is in wired or wireless data communication with user interface 16 of tensile testing machine 12.

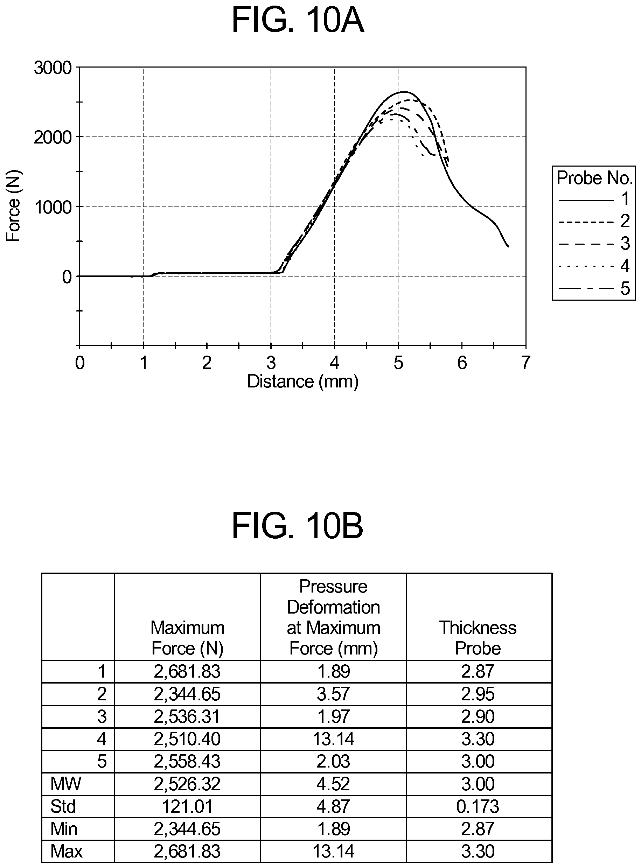

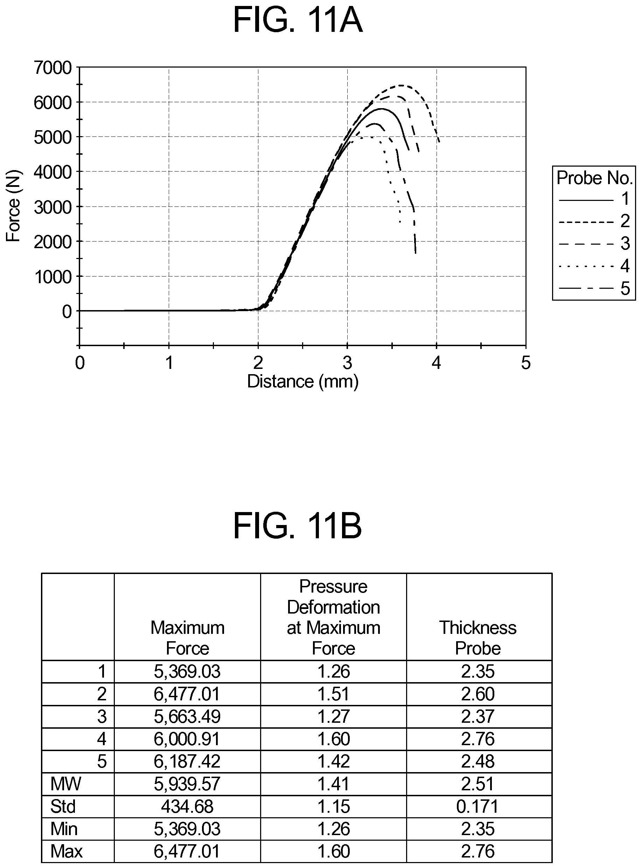

At diamond 132, testing method 110 determines whether there is another sample 100 to test. If so, method 110 returns to block 118 and repeats steps 118 to 130 for a new sample 100. The loop between block 118 and diamond 132 is repeated until no further samples remain. At block 134, computer 14 compiles the results taken from the different samples 100 subjected to the force application program. Figs. 10A, 10B, 11A and 11B discussed below illustrate that the compilation of the results from the tests performed on different test samples 100 may be compared and contrasted both graphically and in tabular form. At oval 136, method 110 ends.

In Fig. 10A, computer 14 may illustrate the graphical results of, e.g., five samples undergoing the same test or force application program. Here, each sample has been subjected to β-sterilization, such that the effects of β-sterilization may be analyzed relative to other forms of sterilization, for example, gamma radiation sterilization or steam sterilization. β-sterilization is sterilization via beta radiation, i.e., electrons. If the electrons are produced by a radioactive source, the term beta radiation is commonly used. If the electron beam is generated instead using a cathode and an accelerator, the term electron beam sterilization is commonly used. For each of the five samples 100, it appears that the member of tensile testing machine 12 moves about 3 mm before piston 40 and cured polymer disk 104 are contacted. Here, the resistive force provided by cured polymer disk 104 rises generally linearly over 2 mm to 2.5 mm of deflection, at which points the cured polymer disks 104 of samples 100 delaminate from test rings 106. The measured forces fall sharply after delamination.

In Fig. 10B, computer 14 may tabulate the results of the sample graphs of Fig. 10A. For each sample 100, maximum force at delamination, deformation at delamination, and thickness measured for the surface area are recorded. Maximum force at delamination, deformation at delamination, and thickness measured for the surface area in Fig. 10B are also analyzed collectively to determine, for each, an average value, the standard deviation, a minimum value and a maximum value. Computer 14 may further analyze the results, e.g., by dividing average maximum force by average thickness for the five samples to arrive at a number (in N/mm), which factors in thickness. In an embodiment, computer 14 calculates an average surface area contact between the cured polymer disk 104 and the test ring 106 from the average thickness and the diameter of the cured polymer disk 104, and calculates the adhesion strength by dividing average maximum force by average surface area contact to arrive at a number (in N/mm²).

In Figs. 11A and 11B, computer 14 may illustrate like graphs and tabular results for gamma radiation sterilization. The same analysis as described above for Figs. 10A and 10B is performed for gamma radiation sterilization, resulting in the data of Figs. 11a and 11B. Afterwards, computer 14 may be further used compare the effects of β-sterilization on adhesion strength to the effects of gamma radiation sterilization. The comparison may lead to a decision to use one type of sterilization over another.

### Element Number Listing

10 - adhesion strength detection system
12 - tensile testing machine
14 - computer
16 - user interface
18 - environmental chamber
20 - die assembly
22 - lower die
24 - inner diameter section of lower die
26 - end section of lower die
28 - end section of lower die
30 - fixture
32 - opening of fixture
40 - piston
50 - plasma treatment device
60 - gamma irradiation chamber
70 - UV-radiation lamp
80 - thickness measuring gauge
90 - timer
100 - sample
102 - colored adhesive tape
104 - cured polymer disk
104a - meniscus of cured polymer disk
106 - test ring
106a - inner diameter wall of test ring
106b - outer diameter wall of test ring
110 - adhesion strength detection method
112 - begin method
114 - pre-sample formation preparation step
116 - test sample creation step
118 - sample thickness measurement step
120 - sample heating step
122 - place sample into die assembly step
124 - load die assembly with sample into tensile testing machine step
126 - select force application program to run on tensile testing machine step
128 - run force application program on tensile testing machine step
130 - send test results to computer step
132 - determine if another sample exists
134 - compile test results step
136 - end method

It should be understood that various changes and modifications to the presently preferred embodiments described herein will be apparent to those skilled in the art. Such changes and modifications may be made without departing from the scope of the present invention and without diminishing its intended advantages. It is therefore intended that such changes and modifications be covered by the appended claims.

## Claims

1. An adhesion strength detection system (10) comprising:
a die assembly (20) including
a lower die (22),
a fixture (30) fitted to the lower die (22), and
a sample (100) including a test ring (106) and filled at least at one end of the ring (106) with a cured polymer disk (104), the test ring (106) resting on the lower die (22), the cured polymer disk (104) unobstructed by the lower die (22); and
a piston (40) insertable into the fixture (30), wherein the sample (100) may be fitted between the lower die (22) and the fixture (30), such that the piston (40) may come to rest on the cured polymer disk (104) of the sample (100) and be moved to apply a force to the cured polymer disk (104) in an attempt to delaminate the cured polymer disk (104) from the test ring (106); and
a tensile testing machine (12) structured to accept the die assembly (20), the tensile testing machine (12) storing a force application program suitable for the sample (100), wherein the force application program when executed causes the piston (40) to be moved against the cured polymer disk (104) of the sample (100), the tensile testing machine (12) further configured to measure a resistive force applied by the sample (100) while the piston (40) is moved at least until delamination of the cured polymer disk (104) from the test ring (106) within the sample (100) occurs.

2. The adhesion strength detection system (10) of Claim 1, wherein the lower die (22) and the fixture (30) define a same or differently sized bore to slidingly receive the piston (40).

3. The adhesion strength detection system (10) of Claims 1 or 2, wherein the piston (40) is sized and shaped to apply a uniformly distributed force across a surface of a cured polymer disk (104) of the sample (100) that becomes delaminated from a test ring (106) of the sample (100), the test ring (106) held fixed between the lower die (22) and the fixture (30).

4. The adhesion strength detection system (10) according to any of Claims 1 to 3, wherein the force application program specifies a speed at which the piston (40) is moved against the cured polymer disk (104) of the sample (100).

5. The adhesion strength detection system (10) according to any of Claims 1 to 4, which includes a heating chamber for heating the sample (100) prior to being fitted between the lower die (22) and the fixture (30).

6. The adhesion strength detection system (10) according to any of Claims 1 to 5, which includes a data storage device (14) storing at least one of: (i) resistive force measured when delamination occurs, (ii) deformation of the sample when delamination occurs, (iii) a minimum force measured from a plurality of forces measured when delamination occurs for a plurality of like samples acted upon according to the force application program, (iv) a maximum force measured from a plurality of forces measured when delamination occurs for a plurality of like samples acted upon according to the force application program, or (v) a standard deviation of a plurality of forces measured when delamination occurs for a plurality of like samples acted upon according to the force application program.

7. The adhesion strength detection system (10) according to any of Claims 1 to 6, which includes a computer readable medium specifically configured to take into account (i) a surface area contact between a cured polymer disk (104) of the sample (100) and a test ring (106) of the sample (100), wherein the cured polymer disk (104) of the sample becomes delaminated from the test ring (106) of the sample, the test ring (106) held fixed between the lower die (22) and the fixture (30), along with (ii) the resistive force measured when delamination occurs.

8. The adhesion strength detection system (10) according to any of Claims 1 to 7, wherein the diameter of the piston (40) is smaller than the diameter of the cured polymer disk (104) by 0.05 to 0.2 mm.

9. The adhesion strength detection system (10) according to any of Claims 1 to 8, wherein the test ring (106) is polypropylene ("PP"), polycarbonate ("PC") or metal.

10. The adhesion strength detection system (10) according to any of Claims 1 to 9, wherein the cured polymer disk (104) is polyurethane ("PU").

11. The adhesion strength detection system (10) according to any of Claims 1 to 10, wherein at least one wall 106a, 106b of the test ring (106) is conically shaped.

12. An adhesion strength detection method (110) comprising:
providing a test ring (106);
temporarily sealing one end of the test ring (106) with a substrate (102);
administering a polymer onto the substrate (102);
allowing the substrate to cure, forming a disk (104) adhered to the test ring (106);
removing the substrate (102);
holding the test ring (106) fixed while pushing against the cured polymer disk (104); and
recording at least one of: (i) a resistive force supplied by the cured polymer disk (104) when the disk becomes delaminated from the test ring (106), or (ii) an amount of deflection of the cured polymer disk (104) when the disk becomes delaminated from the test ring (106).

13. The adhesion strength detection method (110) of Claim 12, which includes determining a surface area contact between the cured polymer disk (104) and the test ring (106) and taking the surface area contact into account with the recorded at least one (i) resistive force or (ii) amount of deflection.

14. The adhesion strength detection method (110) according to Claims 12 or 13, which includes moving a member at a known speed against the cured polymer disk (104) while recording at least one of: (i) the resistive force, or (ii) the amount of deflection.

## Patentansprüche

1. Haftfestigkeitsprüfsystem (10), umfassend:
eine Matrizenbaugruppe (20), die Folgendes beinhaltet:
eine untere Matrize (22),
ein Halterungselement (30), das an der unteren Matrize (22) montiert ist, und
eine Probe (100), die einen Testring (106) beinhaltet und an wenigstens einem Ende des Rings (106) mit einer ausgehärteten Polymerscheibe (104) gefüllt ist, wobei der Testring (106) auf der unteren Matrize (22) ruht, wobei die ausgehärtete Polymerschreibe (104) durch die untere Matrize (22) ungehindert ist; und
einen Kolben (40), der in das Halterungselement (30) einführbar ist, wobei die Probe (100) zwischen der unteren Matrize (22) und dem Halterungselement (30) montiert werden kann, so dass der Kolben (40) auf der ausgehärteten Polymerscheibe (104) der Probe (100) zur Ruhe kommen kann und bewegt werden kann, um in einem Versuch, die ausgehärtete Polymerscheibe (104) von dem Testring (106) zu delaminieren, eine Kraft auf die ausgehärtete Polymerscheibe (104) auszuüben; und
eine Zugtestmaschine (12), die dafür konfiguriert ist, die Matrizenbaugruppe (20) anzunehmen, wobei die Zugtestmaschine (12) ein Kraftausübungsprogramm speichert, das für die Probe (100) geeignet ist, wobei das Kraftausübungsprogramm bei Ausführung bewirkt, dass der Kolben (40) gegen die ausgehärtete Polymerscheibe (104) der Probe (100) bewegt wird, wobei die Zugtestmaschine (12) ferner dazu konfiguriert ist, eine Widerstandskraft zu messen, die durch die Probe (100) ausgeübt wird, während der Kolben (40) wenigstens so lange bewegt wird, bis eine Delaminierung der ausgehärteten Polymerscheibe (104) von dem Testring (106) innerhalb der Probe (100) auftritt.

2. Haftfestigkeitsprüfsystem (10) nach Anspruch 1, wobei die untere Matrize (22) und das Halterungselement (30) eine gleich oder unterschiedlich bemessene Bohrung definieren, in die der Kolben (40) einschiebbar ist.

3. Haftfestigkeitsprüfsystem (10) nach Ansprüchen 1 oder 2, wobei der Kolben (40) so bemessen und geformt ist, dass er eine gleichmäßig verteilte Kraft über eine Oberfläche einer ausgehärteten Polymerscheibe (104) der Probe (100) ausübt, die von einem Testring (106) der Probe (100) delaminiert wird, wobei der Testring (106) zwischen der unteren Matrize (22) und dem Halterungselement (30) fixiert gehalten wird.

4. Haftfestigkeitsprüfsystem (10) nach einem der Ansprüche 1 bis 3, wobei das Kraftausübungsprogramm eine Geschwindigkeit spezifiziert, mit der der Kolben (40) gegen die ausgehärtete Polymerscheibe (104) der Probe (100) bewegt wird.

5. Haftfestigkeitsprüfsystem (10) nach einem der Ansprüche 1 bis 4, das eine Heizkammer zum Erwärmen der Probe (100), bevor sie zwischen der unteren Matrize (22) und dem Halterungselement (30) montiert wird, beinhaltet.

6. Haftfestigkeitsprüfsystem (10) nach einem der Ansprüche 1 bis 5, das eine Datenspeicherungsvorrichtung (14) beinhaltet, die wenigstens eines von Folgendem speichert: (i) Widerstandskraft, die gemessen wird, wenn eine Delaminierung erfolgt, (ii) Verformung der Probe, wenn eine Delaminierung erfolgt, (iii) eine minimale Kraft, die aus mehreren Kräften gemessen wird, die gemessen werden, wenn eine Delaminierung erfolgt bei mehreren ähnlichen Proben, auf die gemäß dem Kraftausübungsprogramm eingewirkt wird, (iv) eine maximale Kraft, die aus mehreren Kräften gemessen wird, die gemessen werden, wenn eine Delaminierung erfolgt bei mehreren ähnlichen Proben, auf die gemäß dem Kraftausübungsprogramm eingewirkt wird, und (v) eine Standardabweichung mehrerer Kräfte, die gemessen werden, wenn eine Delaminierung erfolgt bei mehreren ähnlichen Proben, auf die gemäß dem Kraftausübungsprogramm eingewirkt wird.

7. Haftfestigkeitsprüfsystem (10) nach einem der Ansprüche 1 bis 6, das ein computerlesbares Medium beinhaltet, das speziell dazu konfiguriert ist, (i) einen Oberflächenbereichskontakt zwischen einer ausgehärteten Polymerscheibe (104) der Probe (100) und einem Testring (106) der Probe (100), wobei die ausgehärtete Polymerscheibe (104) der Probe von dem Testring (106) der Probe delaminiert wird, wobei der Testring (106) zwischen der unteren Matrize (22) und dem Halterungselement (30) fixiert gehalten wird, zusammen mit (ii) der Widerstandskraft, die gemessen wird, wenn eine Delaminierung erfolgt, zu berücksichtigen.

8. Haftfestigkeitsprüfsystem (10) nach einem der Ansprüche 1 bis 7, wobei der Durchmesser des Kolbens (40) um 0,05 bis 0,2 mm kleiner als der Durchmesser der ausgehärteten Polymerschreibe (104) ist.

9. Haftfestigkeitsprüfsystem (10) nach einem der Ansprüche 1 bis 8, wobei der Testring (106) aus Polypropylen ("PP"), Polycarbonat ("PC") oder Metall ist.

10. Haftfestigkeitsprüfsystem (10) nach einem der Ansprüche 1 bis 9, wobei die ausgehärtete Polymerscheibe (104) aus Polyurethan ("PU") ist.

11. Haftfestigkeitsprüfsystem (10) nach einem der Ansprüche 1 bis 10, wobei wenigstens eine Wand (106a, 106b) des Testrings (106) konisch geformt ist.

12. Haftfestigkeitsprüfverfahren (110), das Folgendes umfasst:
Bereitstellen eines Testrings (106);
vorübergehendes Versiegeln eines Endes des Testrings (106) mit einem Substrat (102);
Aufbringen eines Polymers auf das Substrat (102);
Aushärten lassen des Substrats, wobei eine Scheibe (104) gebildet wird, die an dem Testring (106) anhaftet;
Entfernen des Substrats (102);
Fixiert halten des Testrings (106), während gegen die ausgehärtete Polymerscheibe (104) gedrückt wird; und
Aufzeichnen von wenigstens einem von Folgendem: (i) einer Widerstandskraft, die durch die ausgehärtete Polymerscheibe (104) bereitgestellt wird, wenn die Scheibe von dem Testring (106) delaminiert wird, und (ii) das Ausmaß einer Auslenkung der ausgehärteten Polymerscheibe (104), wenn die Scheibe von dem Testring (106) delaminiert wird.

13. Haftfestigkeitsprüfverfahren (110) nach Anspruch 12, welches das Bestimmen eines Oberflächenbereichskontakts zwischen der ausgehärteten Polymerscheibe (104) und dem Testring (106) und Berücksichtigen des Oberflächenbereichskontakts bei der aufgezeichneten (i) Widerstandskraft und/oder (ii) Auslenkung umfasst.

14. Haftfestigkeitsprüfverfahren (110) nach Anspruch 12 oder 13, welches das Bewegen eines Elements mit einer bekannten Geschwindigkeit gegen die ausgehärtete Polymerscheibe (104) umfasst, während wenigstens eines von Folgendem aufgezeichnet wird: (i) die Widerstandskraft und (ii) das Ausmaß der Auslenkung.

## Revendications

1. Système de détection de la force d'adhérence (10) comprenant :
un ensemble de matrices (20) comprenant :
une matrice inférieure (22),
un dispositif de fixation (30) montée sur la matrice inférieure (22), et
un échantillon (100) comprenant une bague de test (106) et rempli au moins au niveau d'une extrémité de la bague (106) par un disque en polymère durci (104), la bague de test (106) reposant sur la matrice inférieure (22), le disque en polymère durci (104) n'étant pas obstrué par la matrice inférieure (22) ; et
un piston (40) pouvant être inséré dans le dispositif de fixation (30), dans lequel l'échantillon (100) peut être monté entre la matrice inférieure (22) et le dispositif de fixation (30), de telle sorte que le piston (40) puisse venir reposer sur le disque en polymère durci (104) de l'échantillon (100) et être déplacé pour appliquer une force sur le disque en polymère durci (104) afin d'essayer de décoller le disque en polymère durci (104) de la bague de test (106) ; et
une machine de test de traction (12) structurée pour accepter l'ensemble de matrices (20), la machine de test de traction (12) stockant un programme d'application de force adapté à l'échantillon (100), dans lequel le programme d'application de force, lorsqu'il est exécuté, provoque le déplacement du piston (40) contre le disque en polymère durci (104) de l'échantillon (100), la machine de test de traction (12) étant en outre configurée pour mesurer une force de résistance appliquée par l'échantillon (100) pendant que le piston (40) est déplacé au moins jusqu'à ce qu'un décollement du disque en polymère durci (104) de la bague d'essai (106) à l'intérieur du échantillon (100) se produise.

2. Système de détection de la force d'adhérence (10) selon la revendication 1, dans lequel la matrice inférieure (22) et le dispositif de fixation (30) définissent un alésage de taille identique ou différente pour recevoir de manière coulissante le piston (40).

3. Système de détection de la force d'adhérence (10) selon la revendication 1 ou 2, dans lequel le piston (40) a une dimension et une forme conçues pour appliquer une force uniformément distribuée sur une surface d'un disque en polymère durci (104) de l'échantillon (100) qui se décolle d'une bague de test (106) de l'échantillon (100), la bague de test (106) étant maintenue fixée entre la matrice inférieure (22) et le dispositif de fixation (30).

4. Système de détection de la force d'adhérence (10) selon l'une quelconque des revendications 1 à 3, dans lequel le programme d'application de force spécifie une vitesse à laquelle le piston (40) est déplacé contre le disque en polymère durci (104) de l'échantillon (100).

5. Système de détection de la force d'adhérence (10) selon l'une quelconque des revendications 1 à 4, qui comprend une chambre de chauffage pour chauffer l'échantillon (100) avant qu'il ne soit installé entre la matrice inférieure (22) et le dispositif de fixation (30).

6. Système de détection de la force d'adhérence (10) selon l'une quelconque des revendications 1 à 5, qui comprend un dispositif de stockage de données (14) stockant au moins l'un des éléments suivants : (i) la force de résistance mesurée lorsque le décollement se produit, (ii) la déformation de l'échantillon lorsque le décollement se produit, (iii) une force minimale mesurée à partir d'une pluralité de forces mesurées lorsque le décollement se produit pour une pluralité d'échantillons similaires sur lesquels on agit conformément au programme d'application de force, (iv) une force maximale mesurée à partir d'une pluralité de forces mesurées lorsque le décollement se produit pour une pluralité d'échantillons similaires sur lesquels on agit conformément au programme d'application de force, ou (v) un écart-type d'une pluralité de forces mesurées lorsque le décollement se produit pour une pluralité d'échantillons similaires sur lesquels on agit conformément au programme d'application de la force.

7. Système de détection de la force d'adhérence (10) selon l'une quelconque des revendications 1 à 6, qui comprend un support lisible par ordinateur spécialement configuré pour prendre en compte (i) un contact de surface entre un disque polymère durci (104) de l'échantillon (100) et une bague de test (106) de l'échantillon (100), le disque en polymère durci (104) de l'échantillon se décollant de la bague de test (106) de l'échantillon, la bague de test (106) étant maintenue fixée entre la matrice inférieure (22) et le dispositif de fixation (30), ainsi que (ii) la force de résistance mesurée lorsque le décollement se produit.

8. Système de détection de la force d'adhérence (10) selon l'une quelconque des revendications 1 à 7, dans lequel le diamètre du piston (40) est inférieur au diamètre du disque en polymère durci (104) de 0,05 à 0,2 mm.

9. Système de détection de la force d'adhérence (10) selon l'une quelconque des revendications 1 à 8, dans lequel la bague de test (106) est en polypropylène (« PP »), en polycarbonate (« PC ») ou en métal.

10. Système de détection de la force d'adhérence (10) selon l'une quelconque des revendications 1 à 9, dans lequel le disque polymère durci (104) est en polyuréthane (« PU »).

11. Système de détection de la force d'adhérence (10) selon l'une quelconque des revendications 1 à 10, dans lequel au moins une paroi (106a, 106b) de la bague de test (106) présente une forme conique.

12. Procédé de détection de la force d'adhérence (110) comprenant les étapes consistant à :
fournir une bague de test (106) ;
sceller temporairement une extrémité de la bague de test (106) avec un substrat (102) ;
appliquer un polymère sur le substrat (102) ;
permettre au substrat de durcir, formant un disque (104) collé à la bague de test (106) ;
retirer le substrat (102) ;
maintenir la bague de test (106) fixe tout en poussant contre le disque en polymère durci (104) ; et
enregistrer au moins l'un des éléments suivants : (i) une force de résistance fournie par le disque en polymère durci (104) lorsque le disque se décolle de la bague de test (106), ou (ii) un degré de déviation du disque en polymère durci (104) lorsque le disque se décolle de la bague de test (106).

13. Procédé de détection de la force d'adhérence (110) selon la revendication 12, qui comprend la détermination d'un contact de surface entre le disque en polymère durci (104) et la bague de test (106) et la prise en compte du contact de surface avec l'au moins un(e) (i) force de résistance ou (ii) degré de déviation enregistré(e).

14. Procédé de détection de la force d'adhérence (110) selon la revendication 12 ou 13, qui comprend le déplacement d'un élément à une vitesse connue contre le disque en polymère durci (104) tout en enregistrant au moins l'un des éléments suivants : (i) la force de résistance ou (ii) le degré de déviation.
